(19) Europäisches Patentamt
European Patent Office
Office européen des brevets

(11) **EP 2 087 264 B1**

(12) **EUROPÄISCHE PATENTSCHRIFT**

(45) Veröffentlichungstag und Bekanntmachung des Hinweises auf die Patenterteilung:
**31.03.2010  Patentblatt 2010/13**

(21) Anmeldenummer: **07821947.4**

(22) Anmeldetag: **29.10.2007**

(51) Int Cl.:
*F16K 31/06* (2006.01)          *F16F 9/46* (2006.01)
*B60G 17/08* (2006.01)

(86) Internationale Anmeldenummer:
**PCT/EP2007/061587**

(87) Internationale Veröffentlichungsnummer:
**WO 2008/052954 (08.05.2008 Gazette 2008/19)**

(54) **PROPORTIONALREGELVENTIL**

PROPORTIONAL CONTROL VALVE

SOUPAPE DE REGULATION PROPORTIONNELLE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.11.2006  DE 102006051547**
              **22.05.2007  DE 102007023716**

(43) Veröffentlichungstag der Anmeldung:
**12.08.2009  Patentblatt 2009/33**

(73) Patentinhaber: **Continental Teves AG & Co. oHG**
**60488 Frankfurt (DE)**

(72) Erfinder:
• **FORCHE, Marcus**
  **60433 Frankfurt am Main (DE)**
• **LENZ, René**
  **60599 Frankfurt am Main (DE)**
• **COURTH, Christian**
  **60439 Frankfurt am Main (DE)**
• **NIEDER-VAHRENHOLZ, Axel**
  **65760 Eschborn (DE)**
• **HOFFMANN, Jan**
  **61191 Rosbach (DE)**
• **BILLER, Harald**
  **65760 Eschborn (DE)**
• **KLEIN, Jochen**
  **64289 Darmstadt (DE)**
• **WEY, Fabian**
  **65527 Niedernhausen (DE)**

(56) Entgegenhaltungen:
**EP-A- 1 486 710          WO-A-01/04528**
**WO-A-92/12359          WO-A-97/31197**
**DE-A1-102006 014 463**

## Beschreibung

Die Erfindung betrifft ein Proportionalregelventil zur variablen Verstellung der Dämpfungskraft eines Stoßdämpfers nach dem Oberbegriff des Patentanspruchs 1.

Aus der DE 10 2006 014 463 A1 ist bereits ein Proportionalregelventil zur variablen Verstellung der Dämpferkennlinie eines Schwingungsdämpfers bekannt. Das Verfahren zur Ansteuerung eines derartigen Ventils beeinflusst in entscheidendem Maße die Dynamik des Gesamtsystems, insbesondere wenn während der Kolbenbewegung des Stoßdämpfers in kurzer Zeit durch die Änderung des Erregerstromes am Ventil zwischen weichen und harten Dämpferkennlinien umgeschaltet werden muss.

Daher ist es die Aufgabe der vorliegenden Erfindung, ein Ansteuerverfahren für ein Proportionalregelventil der angegebenen Art anzugeben, dass den hohen Anforderungen an die Dynamik des Gesamtsystems gerecht wird.

Diese Aufgabe wird erfindungsgemäß für ein Proportionalventil der angegebenen Art mit den kennzeichnenden Merkmalen des Patentanspruchs 1 gelöst.

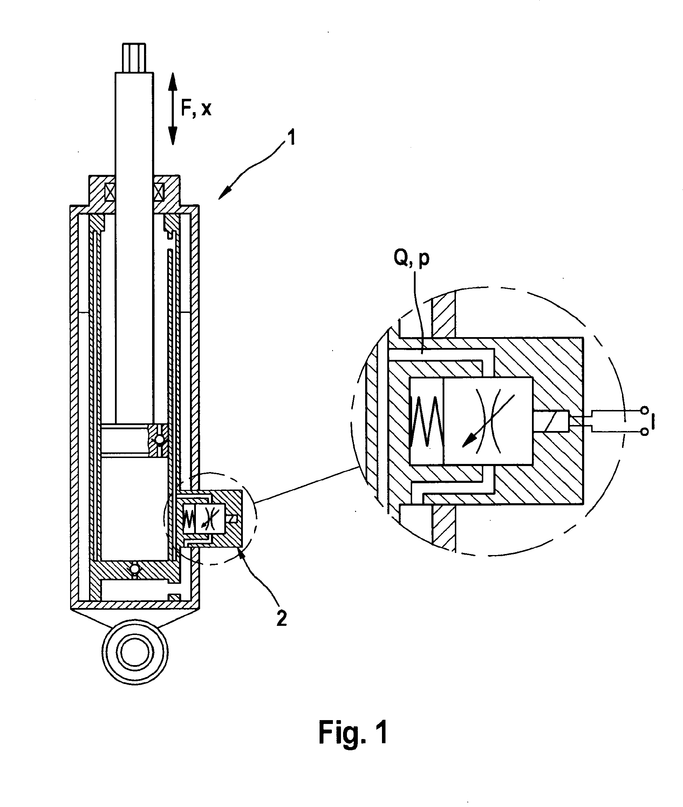

Weitere Merkmale und Vorteile der Erfindung gehen aus der nachfolgenden Beschreibung anhand der Figuren 1-4 hervor.

Die Figur 1 zeigt zum Stand der Technik zunächst anhand einer Skizze einen Stoßdämpfer 1 mit einem symbolisch dargestellten Proportionalregelventil 2, das beispielhaft seitlich im Stoßdämpferrohr integriert ist und daneben vergrößert abgebildet ist. Sowohl bei Zug- als auch Druckbeanspruchung des Stoßdämpfers 1 fließt zwangsweise ein definiertes Hydraulikvolumen über das Proportionalregelventil 2. Das Proportionalregelventil 2 kann also in beiden Bewegungsrichtungen zur Beeinflussung der Charakteristik des Stoßdämpfers 1 benutzt werden, wobei das Proportionalregelventil 2 unabhängig von der Bewegungsrichtung immer in derselben Richtung durchströmt wird.

Die Drosselfunktion des Proportionalregelventils erlaubt, die Dämpfungscharakteristik des Stoßdämpfers wesentlich zu beeinflussen. Dies ist sowohl in der Zug- als auch in der Druckphase möglich.

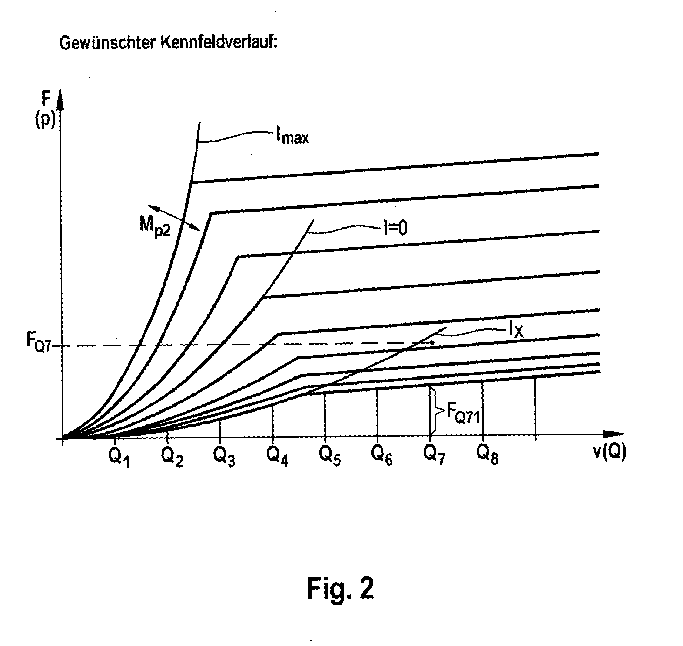

In diesem Zusammenhang lässt sich aus der Figur 2 die durch das Proportionalregelventil gewünschte Dämpfungscharakteristik des Stoßdämpfers in Form eines Kennfeldes entnehmen. Gezeigt wird entlang der Ordinate die durch das Proportionalregelventil einstellbare Dämpfungskraft F bzw. der Hydraulikdruck p in Abhängigkeit von dem durch das Ventil hindurch fließenden Volumenstrom Q, der entlang der Abszisse dargestellt ist. Jede Einzelkennlinie dient zur Darstellung der mittels des Proportionalregelventils im Stoßdämpfer zu realisierenden Dämpfungscharakteristik, die jeweils durch die Variation des elektrischen Stroms am Proportionalregelventil eingestellt wird.

Das Proportionalregelventil hat bei kleinen Volumenströmen Q zunächst die Charakteristik einer Drossel. Bei höheren Volumenströmen Q verhält sich das Proportionalregelventil wie ein Druckbegrenzungsventil. Nimmt die Drosselwirkung zu, so korrigiert das Proportionalventil auch den zugehörigen Begrenzungsdruck im Sinne einer Zunahme des Begrenzungsdrucks.

Das Proportionalregelventil ist derart ausgelegt, dass jede beliebige weitere Kennlinie zwischen den exemplarisch gezeigten Kennlinien durch einen geeigneten elektrischen Strom stufenlos erreicht werden kann.

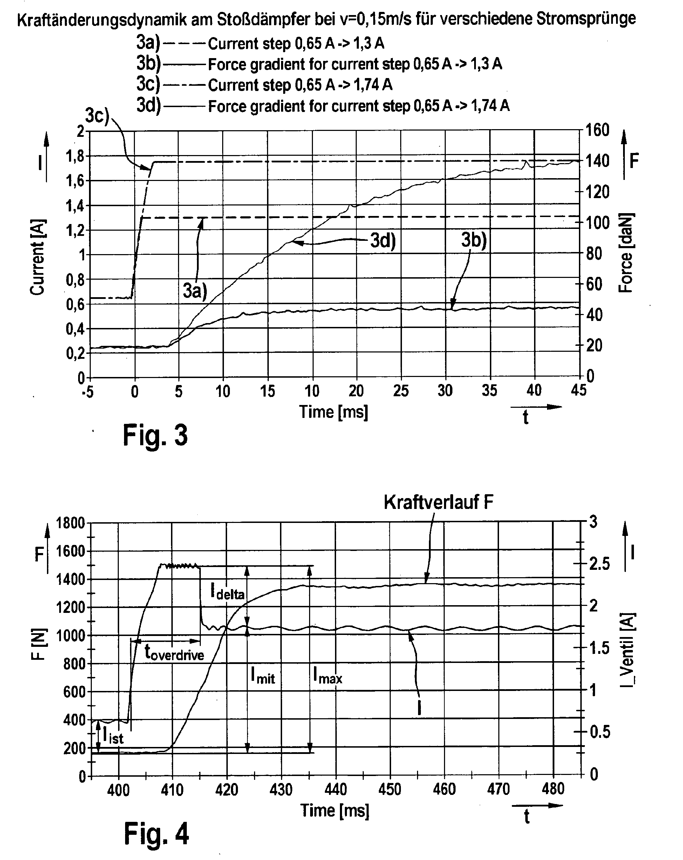

Exemplarisch zeigt die Figur 3 ein Messdiagramm zur Verdeutlichung der von der Ansteuerung des Proportionalregelventils abhängigen Änderung der Dämpfungskraft F am Stoßdämpfer für verschiedene, sprunghafte Änderungen der elektrischen Stromstärke I (Stromsprünge). Sowohl die Werte zur Änderung der Dämpfungskraft F als auch die Werte zur Änderung des Stroms I sind der Ordinate zu entnehmen, während entlang der Abszisse die Zeitdauer t aufgetragen ist.

Aus den in Figur 3 ersichtlichen Kennlinienverläufen wird deutlich, dass sich je nach Höhe des Stromsprunges eine unterschiedliche Druck- und Kraftaufbaudynamik innerhalb der Dämpferhydraulik ergibt. Bei geringen Stromänderungen (siehe Kennlinie 3a) ist die Geschwindigkeit der Kraftänderung (siehe Kennlinie 3b) kleiner als bei größeren Werten (siehe Kennlinien 3c, 3d). Dieses Verhalten ergibt sich prinzipbedingt aus dem Verhalten des Proportionalregelventils. Je nach angelegter elektrischer Stromstärke I ändert sich der Drosselquerschnitt im Proportionalregelventil und somit das Dämpfungsverhalten. Im vorliegenden Beispiel entspricht eine niedrige Stromstärke I einem großen Öffnungsquerschnitt des Proportionalregelventils und mit Zunahme des Erregerstromes nimmt die Drosselwirkung des Proportionalregelventils zu. Bei einer konstanten Dämpfergeschwindigkeit, im vorliegenden Beispiel des Messdiagramms beträgt die Kolbengeschwindigkeit v = 0,16 m/s, wird sich nun entsprechend der Änderung der Stromstärke I der Ventilöffnungsquerschnitt und folglich die Dämpfungskraft F des Stoßdämpfers ändern. Am schnellsten ändert sich die Dämpfungskraft F, wenn das Proportionalregelventil komplett geschlossen wird, da in diesem Fall keine Flüssigkeit durch den Ventilquerschnitt abfließt, womit sich die Druckaufbaudynamik im Stoßdämpferrohr verlangsamt.

Um deshalb auch für kleine Änderungen der Dämpfungskraft F eine hohe Kraftaufbaudynamik zu erreichen, wird nunmehr erfindungsgemäß vorgeschlagen, das Proportionalregelventil durch eine hohe Stromstärke Imax zunächst für eine kurze Zeitspanne $t_{overdrive}$ vollständig zu schließen, um es anschließend wieder durch das Absenken auf eine definierte mittlere Stromstärke Imit zu öffnen, wodurch es danach wieder in die gewünschte mittlere Position gelangt, in der es einen mittleren Volumenstrom Q einstellt. Hieraus lässt sich vorteilhaft mit hoher Kraftaufbaudynamik von niedrige auf mittlere Dämpfungskräfte F springen.

Ausgehend von der in Figur 3 gewählten Darstellungsweise verdeutlicht die Figur 4 den für die Erfindung charakteristischen Verlauf der Dämpfungskraft F in Abhängigkeit der Stromstärke Imax, Imit am Proportionalregelventil über der Zeitdauer T bzw. Zeitspanne $t_{overdrive}$. Hierbei wird der zeitliche Verlauf der maximalen Stromstärke Imax durch die kurze Zeitspanne toverdrive definiert, während der das Proportionalregelventil zunächst mit der maximalen Stromstärke Imax bestromt wird, bevor auf einen niedrigeren, gewünschten mittleren Wert der Stromstärke Imit zurückgesprungen wird.

Der entscheidende Punkt der Erfindung ist somit darin zu sehen, dass ausgehend von einem momentanen Wert des Stromstärkeniveaus $I_{ist}$ durch eine kurzzeitige Bestromung des Proportionalventils mit $I_{max}$ ein Stromsprung ausgelöst wird, dem ein sprunghaftes Zurücksetzen auf das gewünschte niedrigere Stromniveau $I_{mit}$ folgt, wodurch das Proportionalventil kurzzeitig geschlossen wird. Somit erfolgt auf besonders vorteilhafte Weise der Druckaufbau und die gewünschte Dämpfungskraftänderung im Stoßdämpfer erheblich schneller als dies bisher möglich war.

Durch die zeitliche Länge des "Overdrive", das heißt durch die Zeitspanne $t_{overdrive}$, während der die maximale Stromstärke Imax wirksam ist, kann somit die Dynamik des Stoßdämpfers hinsichtlich der Änderung des Dämpfungsverhaltens beeinflusst werden. Hierbei muss jedoch auch beachtet werden, dass bei zu langem "Overdrive", d.h. bei zu langer Zeitspanne $t_{overdrive}$, die Dämpfungskraft F für einen kurzen Zeitraum auf eine höheren als den gewünschten Kraftwert ansteigen kann, das heißt, dass sie "überschießt". Dieses Verhalten kann verhindert werden, in dem man für die verschiedenen Randbedingungen die zeitliche Länge des "Overdrive" anpasst.

Die während des Fahrbetriebes im Fahrzeug veränderlichen Einflussparameter für dieses Verhalten sind die folgenden:

-  Dämpfergeschwindigkeit: $V_{Dämpfer}$
-  Höhe des Stromsprunges: $I_{delta}$ (entspricht der Höhe der gewünschten Dämpfungsänderung)
-  Stromstärkeniveau vor der Änderung: $I_{ist}$

Somit ergibt sich für die Zeitspanne $t_{overdrive}$ folgende Forderung für die permanente Anpassung der Länge des "Overdrive" im Fahrbetrieb:

$$t_{overdrive} = f ( v_{Dämpfer}, I_{delta}, I_{ist})$$

Diese Anpassung des "Overdrive" wird realisiert durch ein im Steuergerät hinterlegtes Kennfeld oder auch durch eine modellgesteuerte Echtzeitsimulation des Kraftverlaufes im Stoßdämpfer.

Hierbei müssen folgende statischen Einflussparameter, die je nach Fahrzeug / Fahrzeugachse unterschiedlich sein können, für die Modellbildung des "Overdrive" berücksichtigt werden:

-  Größe des Stoßdämpfers (Kolbendurchmesser, Druckstangendurchmesser)
-  Elastizitätsmodul des Stoßdämpfers
-  Proportionalverhalten des Drosselventils
-  Viskosität der Stoßdämpferflüssigkeit

**Patentansprüche**

1.  Proportionalregelventil zur variablen hydraulischen Verstellung der Dämpfungskraft eines Stoßdämpfers, wozu das Proportionalregelventil über eine Drosselfunktion verfügt, die durch die Variation der elektrischen Stromstärke einstellbar ist, **dadurch gekennzeichnet, dass** ausgehend von einem momentanen Stromstärkeniveau ($I_{ist}$) das Proportionalregelventil zur Änderung der Dämpfungskraft (F) zunächst durch Erhöhung auf eine maximale Stromstärke ($I_{max}$) für eine kurze Zeitspanne ($t_{overdrive}$) geschlossen wird, danach wieder durch das Absenken der Stromstärke (I) auf eine definierte mittlere Stromstärke ($I_{mit}$) geöffnet wird, in der das Proportionalventil eine Zwischenposition einnimmt, aus der im Stoßdämpfer ein Volumenstrom (Q) resultiert, welcher der gewünschten Änderung der Dämpfungskraft (F) entspricht.

2.  Proportionalregelventil nach Anspruch 1, **dadurch gekennzeichnet, dass** die Dauer der Zeitspanne ($t_{overdrive}$) abhängig von der Kolbengeschwindigkeit (v) eines im Stoßdämpfer translatorisch bewegten Dämpferkolbens eingestellt wird.

3.  Proportionalregelventil nach Anspruch 1, **dadurch gekennzeichnet, dass** die Dauer der Zeitspanne (toverdrive) abhängig von der Höhe der Änderung der Stromstärke ($I_{delta}$) eingestellt wird, die der Höhe der gewünschten Änderung der Dämpfungskraft (F) entspricht.

4.  Proportionalregelventil nach Anspruch 1, **dadurch gekennzeichnet, dass** die Dauer der Zeitspanne ($t_{overdrive}$) abhängig vom momentanen, vor der Änderung der Stromstärke (I) herrschenden Stromstärkeniveau ($I_{ist}$) eingestellt wird.

5.  Proportionalregelventil nach den Ansprüchen 1 bis 4, **dadurch gekennzeichnet, dass** die zur Einstellung der Zeitspanne ($t_{overdrive}$) zu berücksichtigenden Parameter, wie Kolbengeschwindigkeit (v), Stromstärkeänderung ($I_{delta}$), Stromstärkeniveau ($I_{ist}$) in einem Steuergerätekennfeld hinterlegt sind oder mittels Echtzeitsimulation des Kraftverlaufs im Stoßdämpfer erfasst werden.

6.  Proportionalregelventil nach einem der vorangegangenen Ansprüche, **dadurch gekennzeichnet, dass** die zur Einstellung der Zeitspanne ($t_{overdrive}$) zu berücksichtigenden Parameter, wie Kolbengeschwindigkeit (v), Stromstärkeänderung ($I_{delta}$), Stromstärkeniveau ($I_{ist}$) durch geeignete Modellbildung in einem Steuergerät hinterlegt sind, wobei zur Modellbildung zusätzlich die Viskosität der Stoßdämpferflüssigkeit erfasst wird.

7.  Proportionalregelventil nach einem der vorangegangenen Ansprüche, **dadurch gekennzeichnet, dass** die zur Einstellung der Zeitspanne ($t_{overdrive}$) zu berücksichtigenden Parameter, wie Kolbengeschwindigkeit (v), Stromstärkeänderung ($I_{delta}$), Stromstärkeniveau ($I_{ist}$) durch geeignete Modellbildung in einem Steuergerät hinterlegt sind, wobei zur Modellbildung zusätzlich der Elastizitätsmodul des Stoßdämpfers erfasst wird.

8.  Proportionalregelventil nach einem der vorangegangenen Ansprüche, **dadurch gekennzeichnet, dass** die zur Einstellung der Zeitspanne ($t_{overdrive}$) zu berücksichtigenden Parameter, wie Kolbengeschwindigkeit (v), Stromstärkeänderung ($I_{delta}$), Stromstärkeniveau ($I_{ist}$) durch geeignete Modellbildung in einem Steuergerät hinterlegt sind, wobei zur Modellbildung zusätzlich das dynamische Verhalten des Proportionalregelventils erfasst wird.

**Claims**

1.  Proportional control valve for the variable hydraulic adjustment of the damping force of a shock absorber, for which purpose the proportional control valve has a throttle function which can be set by means of the variation of the electrical current intensity, **characterized in that**, starting from an instantaneous current intensity level ($I_{act}$), to change the damping force (F) the proportional control valve is first closed for a short time span ($t_{overdrive}$) by means of an increase to a maximum current intensity ($I_{max}$), and is subsequently opened again by means of the lowering of the current intensity (I) to a defined average current intensity ($I_{av}$), at which the proportional valve assumes an intermediate position which results, in the shock absorber, in a volume flow (Q) which corresponds to the desired change in the damping force (F).

2.  Proportional control valve according to Claim 1, **characterized in that** the duration of the time span (toverdrive) is set as a function of the piston speed (v) of a damper piston moved in translational motion in the shock absorber.

3.  Proportional control valve according to Claim 1, **characterized in that** the duration of the time span ($t_{overdrive}$) is set as a function of the amount of change in the current intensity ($I_{delta}$) which corresponds to the amount of desired change in the damping force (F).

4.  Proportional control valve according to Claim 1, **characterized in that** the duration of the time span ($t_{overdrive}$) is set as a function of the instantaneous current intensity level ($I_{act}$) prevailing before the change in the current intensity (I).

5.  Proportion control valve according to Claims 1 to 4, **characterized in that** the parameters, such as the piston speed (v), current intensity change ($I_{delta}$) and current intensity level ($I_{act}$), which are to be taken into account for setting the time span ($T_{overdrive}$) are stored in a control apparatus characteristic map or detected by means of a real-time simulation of the force profile in the shock absorber.

6.  Proportional control valve according to one of the preceding claims, **characterized in that** the parameters, such as the piston speed (v), current intensity change ($I_{delta}$) and current intensity level ($I_{act}$), which are to be taken into account for setting the time span (toverdrive) are stored in a control apparatus by means of suitable modelling, the viscosity of the shock absorber fluid additionally being detected for the modelling.

7. Proportional control valve according to one of the preceding claims, **characterized in that** the parameters, such as the piston speed (v), current intensity change ($I_{delta}$) and current intensity level ($I_{act}$), which are to be taken into account for setting the time span ($t_{overdrive}$) are stored in a control apparatus by means of suitable modelling, the modulus of elasticity of the shock absorber additionally being detected for the modelling.

8. Proportional control valve according to one of the preceding claims, **characterized in that** the parameters, such as the piston speed (v), current intensity change ($I_{delta}$) and current intensity level ($I_{act}$), which are to be taken into account for setting the time span ($t_{overdrive}$) are stored in a control apparatus by means of suitable modelling, the dynamic behaviour of the proportional control valve additionally being detected for the modelling.

## Revendications

1. Soupape de régulation proportionnelle pour l'ajustement hydraulique variable de la force d'amortissement d'un amortisseur, la soupape de régulation proportionnelle disposant dans ce but d'une fonction d'étranglement qui peut être ajustée par la variation de l'intensité du courant électrique, **caractérisée en ce que**
   pour modifier la force d'amortissement (F), partant d'un niveau instantané d'intensité de courant ($I_{ist}$), la soupape de régulation proportionnelle est d'abord fermée pendant un court laps de temps ($t_{overdrive}$) par augmentation de l'intensité de courant jusqu'à une intensité maximale ($I_{max}$) et est ensuite ouverte par abaissement de l'intensité (I) du courant jusqu'à une intensité moyenne définie ($I_{mit}$) du courant pour laquelle la soupape proportionnelle prend une position intermédiaire qui entraîne dans l'amortisseur un écoulement volumique (Q) qui correspond à la modification souhaitée de la force d'amortissement (F).

2. Soupape de régulation proportionnelle selon la revendication 1, **caractérisée en ce que** la durée du laps de temps ($t_{overdrive}$) est réglée en fonction de la vitesse (v) d'un piston d'amortisseur qui se déplace en translation dans l'amortisseur.

3. Soupape de régulation proportionnelle selon la revendication 1, **caractérisée en ce que** la durée du laps de temps ($t_{overdrive}$) est réglée en fonction du niveau de la modification de l'intensité ($I_{delta}$) du courant qui correspond au niveau souhaité de modification de la force d'amortissement (F).

4. Soupape de régulation proportionnelle selon la revendication 1, **caractérisée en ce que** la durée du laps de temps ($t_{overdrive}$) est réglée en fonction du niveau d'intensité ($I_{ist}$) du courant qui régnait avant la modification de l'intensité (I) du courant.

5. Soupape de régulation proportionnelle selon les revendications 1 à 4, **caractérisée en ce que** les paramètres dont il est tenu compte pour le réglage du laps de temps ($t_{overdrive}$), par exemple la vitesse (v) du piston, la modification ($I_{delta}$) de l'intensité du courant, le niveau ($I_{ist}$) d'intensité de courant, sont conservés dans un champ de caractéristiques de l'appareil de commande ou sont détectés au moyen d'une simulation en temps réel de l'évolution des forces dans l'amortisseur.

6. Soupape de régulation proportionnelle selon l'une des revendications précédentes, **caractérisée en ce que** les paramètres dont il est tenu compte dans le réglage du laps de temps ($t_{overdrive}$), par exemple la vitesse (v) du piston, la modification ($I_{delta}$) de l'intensité du courant, le niveau ($I_{ist}$) de l'intensité du courant, sont conservés dans un appareil de commande par formation d'un modèle approprié, la viscosité du liquide d'amortisseur étant de plus détectée pour former le modèle.

7. Soupape de régulation proportionnelle selon l'une des revendications précédentes, **caractérisée en ce que** les paramètres dont il est tenu compte pour le réglage du laps de temps ($t_{overdrive}$), par exemple la vitesse (v) du piston, la modification ($I_{delta}$) de l'intensité du courant, le niveau ($I_{ist}$) de l'intensité du courant sont conservés dans un appareil de commande par formation d'un modèle approprié, le module d'élasticité de l'amortisseur étant de plus saisi pour former le modèle.

8. Soupape de régulation proportionnelle selon l'une des revendications précédentes, **caractérisée en ce que** les paramètres dont il est tenu compte pour le réglage du laps de temps ($t_{overdrive}$), par exemple la vitesse (v) du piston, la modification ($I_{delta}$) de l'intensité du courant, le niveau ($I_{ist}$) de l'intensité du courant, sont conservés dans un appareil de commande par formation d'un modèle approprié, le comportement dynamique de la soupape de régulation proportionnelle étant en outre détecté pour former le modèle.

F, x

1

Q, p

2

I

Fig. 1

Gewünschter Kennfeldverlauf:

Fig. 2

Kraftänderungsdynamik am Stoßdämpfer bei v=0,15m/s für verschiedene Stromsprünge

3a) — — — Current step 0,65 A -> 1,3 A
3b) ———— Force gradient for current step 0,65 A -> 1,3 A
3c) — — · — Current step 0,65 A -> 1,74 A
3d) ———— Force gradient for current step 0,65 A -> 1,74 A

**Fig. 3**

**Fig. 4**

EP 2 087 264 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006014463 A1